# EUROPÄISCHE PATENTANMELDUNG

(11) **EP 1 707 838 A1**
(43) Veröffentlichungstag der Anmeldung: **04.10.2006**
(21) Anmeldenummer: 06003766.0
(22) Anmeldetag: 24.02.2006
(51) Int. Cl.: F16D 48/06

(54) **Vorrichtung zur Betätigung einer Kupplung**

(30) Priorität: 31.03.2005 DE 102005014634
(71) Anmelder: LuK Lamellen und Kupplungsbau Beteiligungs KG, 77815 Bühl (DE)
(72) Erfinder: Küpper, Klaus, Dr., 77815 Bühl (DE); Winkelmann, Stefan, 77815 Bühl (DE); Serebrennikov, Boris, 76532 Baden-Baden (DE); Stopp, Ralf, Dr., 77815 Bühl (DE)

(57) **Zusammenfassung**

Die Erfindung schafft eine Vorrichtung zur Betätigung einer Kupplung (9) eines Fahrzeugs, mit einem den Verfahrweg der Kupplung (9) verstellenden Aktor (2) und einer Einrichtung zur Vermeidung von Rupfschwingungen, die einen dem Verfahrweg überlagerten Verstellweg erzeugt, wobei die Einrichtung ein piezoelektrischer Aktuator (10) ist.

## Beschreibung

Die vorliegende Erfindung betrifft eine Vorrichtung zur Betätigung einer Kupplung eines Fahrzeugs, mit einen dem Verfahrweg der Kupplung verstellenden Aktor und einer Einrichtung zur Vermeidung von Rupfschwingungen, die einen dem Verfahrweg überlagerten Verstellweg erzeugt.

Bei einem Fahrzeug mit einer Reibungskupplung als Anfahrelement kann es beim Anfahrvorgang mit schlupfender Kupplung zu sogenannten Rupfschwingungen kommen, die aufgrund von in den Antriebsstrang eingeleiteter Wechselmomente entstehen.

Diese Drehschwingungen im Antriebsstrang werden von den angetriebenen Fahrzeugrädern in Längsschwingungen des Fahrzeugs umgewandelt und so auf die Fahrzeuginsassen übertragen. Diese Rupfschwingungen äußeren sich daher als unangenehme und komfortmindernde Schwingungen oder Vibrationen und können auch zu Geräuschbelastungen führen.

Es ist nun zwar grundsätzlich möglich, durch hohe Dämpfung im Antriebsstrang den Rupfschwingungen entgegen zu wirken, dies führt aber auch im normalen Betrieb zu einem Anstieg des Kraftstoffverbrauchs des Fahrzeugs, was dem Bestreben nach Wirkungsgradsteigerung entgegen wirkt. Dieses auch als Kupplungsrupfen bekannte Phänomen kann auch durch Abweichungen der Kupplungsscheiben oder der Gegendruckplatte hinsichtlich ihrer Planparallelität entstehen und auch durch eine Absenkung der Tolleranzen dieser Bauteile bekämpft werden, was aber andererseits zu deutlich ansteigenden Kosten bei der Fertigung führt.

Aus der auf die Anmelderin zurückgehenden DE 103 53 174 A1 ist ein hydraulisches System zur Betätigung einer Kupplung bekannt geworden, mit einer Einrichtung zur Vermeidung von Rupfschwingungen, die einen dem Verfahrweg eines Aktors überlagerten Verstellweg erzeugt. Es handelt sich bei diesem bekannten hydraulischen System um einen fußbetätigen Geberzylinder, der einen an einem Kupplungsausrückhebel angreifenden Nehmerzylinder beaufschlägt und bei dem in dem hydraulischen Ansteuerkreis ein Zwischenkolben angeordnet ist, der als Nebenausrücksystem einen dem vom Hauptausrücksystem erzeugten Verfahrweg überlagerten Verstellweg erzeugt.

Treten nun bei diesem bekannten System Rupfschwingungen auf, werden diese von einem Sensor erfasst und einem Steuergerät zugeführt. Dieses Steuergerät enthält einen Regler, der nach einem Regelalgorithmus arbeitet und einen Aktor in Phase, Frequenz und Amplitude derart ansteuert, dass eine der Rupfschwingung entgegenwirkende Momentenschwankung im Antriebsstrang erzeugt wird, also die Rupfschwingungen durch eine geeignete dynamische Veränderung des Antriebsmoments in dem Antriebsstrang ausgeglichen bzw. getilgt werden. Der Aktor wird dabei von einem Motor betätigt.

Die als unangenehm empfundenen Längsschwingungen des Fahrzeugs werden durch die vorstehend beschriebenen Störanregungen hervorgerufen, sodass es durchaus Sinn macht, eine der Störanregung entgegenwirkende Maßnahme vorzusehen, die sehr schnell reagiert, nämlich bereits nach dem ersten Erkennen bzw. den ersten Anzeichen der Störanregung.

Bei der bekannten Vorrichtung muss zu diesem Zweck von dem Steuergerät der Motor angesteuert werden, der wiederum Einfluss nimmt auf den Steuerkolben, der einen dem Verfahrweg des Hauptausrücksystems überlagerten Verstellweg erzeugt. Diese Schilderung macht deutlich, dass eine lange Wirkkette durchlaufen werden muss, bis ein dem Verfahrweg überlagerter Verstellweg erzeugt wird, sodass nicht eine der Störanregung entgegenwirkende Maßnahme direkt nach den ersten Anzeichen der Störanregung ergriffen werden kann.

Der vorliegenden Erfindung liegt nun zur Beseitigung der geschilderten Nachteile die Aufgabe zugrunde, eine sehr schnell wirkende Verstellwegserzeugung zu ermöglichen, um in wirksamer Weise den Rupfschwingungen sehr schnell entgegenwirken zu können.

Die zur Lösung dieser Aufgabe geschaffene Vorrichtung weist nun die Merkmale des Anspruchs 1 auf, vorteilhafte Ausgestaltungen hiervon sind in den weiteren Ansprüchen beschrieben.

Die Erfindung sieht nun zur Lösung dieser Aufgabe eine Vorrichtung vor zur Betätigung einer Kupplung eines Fahrzeugs, mit einen dem Verfahrweg der Kupplung verstellenden Aktor und einer Einrichtung zur Vermeidung von Rupfschwingungen, die einen dem Verfahrweg überlagerten Verstellweg erzeugt, wobei die Einrichtung ein piezoelektrischer Aktuator ist. Ein solcher Aktuator zeichnet sich durch eine hohe Dynamik bei gleichzeitig geringer Energieaufnahme aus. Mit einem solchen Piezoaktor kann unter anderem auch das Entstehen eines Slip-Stick-Effekts vermieden werden, der zur Bekämpfung von Rupfschwingungen kontraproduktiv wäre.

Aufgrund seiner ausgesprochen niedrigen Einschwingzeit ermöglicht der nach der Erfindung vorgesehene piezoelektrische Aktuator, dass in sehr kurzer Reaktionszeit ein der Störanregung gegenphasiger und die Rupfschwingung zumindest weitgehend auslöschender modulierbarer Verstellweg realisiert werden kann, sodass der von einem solchen piezoelektrischen Aktuator erzeugbare nur sehr geringe Stellweg ausreichend ist dafür, dass bereits zu Beginn der Störanregung eine wirksame Bekämpfung/Dämpfung durchführbar ist.

Da der piezoelektrische Aktuator nur einen geringen Verstellweg ermöglicht und somit den zum Öffnen und/oder Schließen der Kupplung erforderlichen Verfahrweg nicht bereitstellen kann, ist es nach der Erfindung vorgesehen, dass der vom piezoelektrischen Aktuator realisierbare Verstellweg nach dem Superpositionsprinzip dem Verfahrweg des Aktors überlagert wird, um beispielsweise bei einem zum Schließen der Kupplung vom Aktor erzeugten Verfahrweg einen dem Verfahrweg entgegengesetzt gerichteten Verstellweg zu überlagern, um damit bereits vor dem Entstehen einer als komfortmindernd empfundenen Fahrzeuglängsschwingung der Störanregung entgegen zu wirken.

Zu diesem Zweck kann der Aktuator in der Kraftübertragungsstrecke zwischen dem Aktor und der Kupplung funktional seriell angeordnet sein. Damit kann der Aktuator beispielsweise auch direkt an einem Ausgangsstellglied des Aktors angebracht werden, sodass sich eine vom Aktor beispielsweise erbrachte translatorische Bewegung additiv überlagert mit der vom Aktuator erbrachten translatorischen Bewegung.

Eine solche Anordnung kann beispielsweise von Vorteil sein, wenn der Aktor eine Kolbenstange besitzt, mit der in einer hydraulischen Kraftübertragungsstrecke zu einem an der Kupplung bzw. einem Ausrückhebel der Kupplung angreifenden Nehmerzylinder Hydraulikfluid zur Betätigung des Nehmerzylinders verschoben wird. Führt nun der Aktor als Geberzylinder einen Verfahrweg aus, der auf der Seite der Kupplung zu einer Betätigung des Nehmerzylinders und damit zu einer Betätigung des Ausrückhebels führt, die zu einer Störanregung der Kupplung zur Rupfschwingung führt, so kann der an der Kolbenstange des Geberzylinders angeordnete piezoelektrische Aktor einen der Störanregung gegenphasigen Verstellweg erzeugen, sodass es wirkungsvoll unmittelbar zu Beginn der Störanregung zu einer Bekämpfung/Dämpfung der Störanregung kommt.

Neben dieser funktional seriellen Anordnung des Aktuators ist es nach der Erfindung aber auch vorgesehen, das der Aktuator in der Kraftübertragungsstrecke zwischen dem Aktor und der Kupplung funktional parallel angeordnet ist. Damit kann der Aktuator beispielsweise in einer hydraulischen Kraftübertragungsstrecke ein Fluidvolumen zur Beaufschlagung des Nehmerzylinders bewegen, welches beabstandet zum Ort der Bewegung des Hauptvolumens an Fluid durch den Aktor verschoben wird. Damit ermöglicht es die Erfindung auch, im Sinne eines Add-On-Systems, vorhandene hydraulische Systeme zur Kupplungsbetätigung so zu modifizieren, dass eine Bekämpfung/Dämpfung der Rupfschwingungen möglich ist.

Es ist dabei nach der Erfindung vorgesehen, dass der Aktor einen hydraulischen Geberzylinder zur Verschiebung eines Fluids beaufschlagen kann derart, dass das verschobene Fluid einen die Kupplung betätigenden Nehmerzylinder beaufschlägt und der Aktuator zur Betätigung eines Zylinders und/oder einer Kolbenstange des Geberzylinders und/oder des Nehmerzylinders ausgebildet ist. Damit ist nach der Erfindung vorgesehen, dass der Aktuator am Zylinder des Geberzylinders und/oder des Nehmerzylinders angebracht werden kann oder auch an der Kolbenstange des Geberzylinders und/oder Nehmerzylinders.

Im Sinne einer Add-On-Lösung kann der Aktuator auch einen Hebel zum Öffnen und/oder Schließen der Kupplung entlang des modulierbaren Verstellwegs direkt beaufschlagen, sodass der Aktuator beispielsweise an einem Widerlager eines Ausrückhebels der Kupplung angebracht ist und durch die Verschiebung des Widerlagers des Ausrückhebels einer festgestellten Störanregung entgegenwirkt.

Es ist dabei nach der Erfindung vorgesehen, dass der Aktor und der Aktuator zur automatisierten Betätigung einer Kupplung angesteuert werden können. So kann der das Hauptausrücksystem darstellende Aktor mittels eines Kupplungssteuergeräts angesteuert werden, welches über einen entsprechenden Sensor zur Feststellung einer Störanregung auch den Aktuator so ansteuert, dass der Störanregung entgegengewirkt wird.

Im Sinne eines Add-On-Systems kann der Aktor auch mittels eines vom Fahrer des Fahrzeugs betätigten Kupplungspedals angesteuert werden, dem ein Aktuator in der Kraftübertragungsstrecke zur Kupplung funktional parallel oder seriell zugeordnet ist, der über ein Steuergerät so angesteuert wird, dass eine von einem Sensor erfasste Störanregung mittels der Erzeugung einer gegenphasigen Verstellbewegung des piezoelektrischen Aktuators weitgehend ausgelöscht wird.

Die Erfindung wird im Folgenden anhand der Zeichnung näher erläutert. Diese zeigt in:
Fig. 1 eine schematische Darstellung einer Vorrichtung zur Betätigung einer Kupplung eines Fahrzeugs nach einer ersten Ausführungsform gemäß der vorliegenden Erfindung;
Fig. 2 eine Darstellung ähnlich derjenigen nach Figur 1, die eine zweite Ausführungsform nach der vorliegenden Erfindung zeigt;
Fig. 3 wiederum eine Darstellung ähnlich Fig. 1, die eine dritte Ausführungsform einer Vorrichtung nach der vorliegenden Erfindung zeigt; und
Fig. 4 eine vierte Ausführungsform nach der vorliegenden Erfindung.

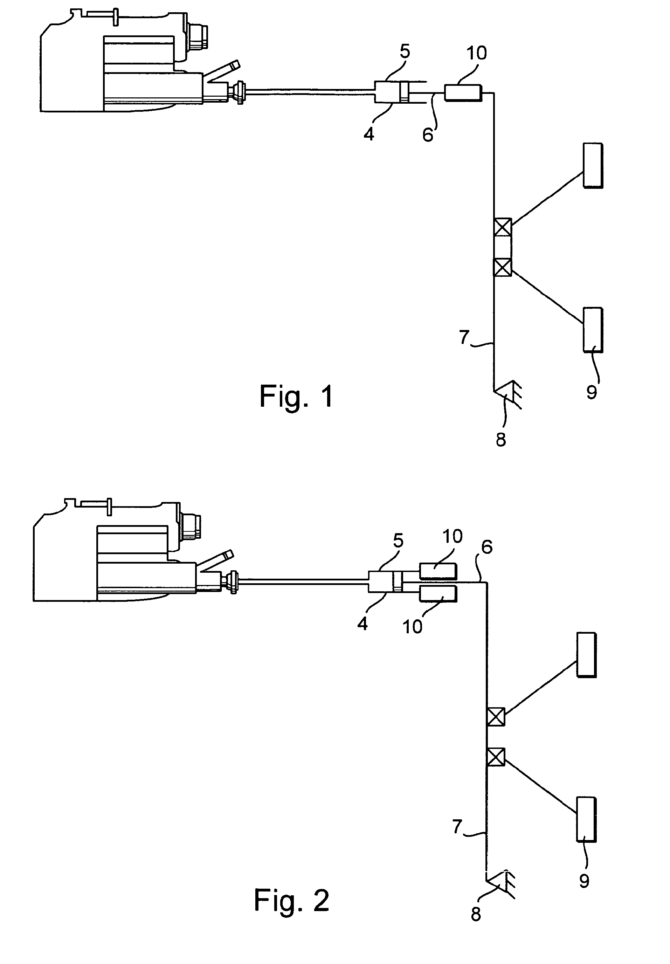

Fig. 1 der Zeichnung zeigt in einer schematischen Darstellung eine erste Ausführungsform einer Vorrichtung 1 zur Betätigung einer Kupplung eines Fahrzeugs nach der vorliegenden Erfindung.

Es handelt sich bei den in den Zeichnungen dargestellten Ausführungsformen ganz allgemein um hydraulisch arbeitende Kupplungsbetätigungsvorrichtungen, die Erfindung lässt sich aber auch an beispielsweise rein mechanisch, also ohne die Zwischenschaltung eines Kraftübertragungsfluids, arbeitenden Vorrichtung implementieren.

Das Bezugszeichen 2 kennzeichnet einen Aktor, der zur Verschiebung eines hydraulischen Fluids in einer Druckmittelleitung ausgebildet ist. Der Aktor besitzt einen Geberzylinder 3, und kann auf diese Weise über nicht näher dargestellte Hydraulikleitungen unter Druck gesetztes Hydraulikfluid in Richtung zu einem kupplungsseitig montierten Nehmerzylinder 4 beaufschlagen. Auf diese Weise stellt der Aktor 2 das dem Verfahrweg der Kupplung herbeiführende Hauptausrücksystem dar. Wenn nunmehr mittels des Aktors ein hydraulisches Fluid durch den Geberzylinder 3 zum Nehmerzylinder 4 hin verschoben wird, so führt dies auf der Seite des Nehmerzylinders 4 zur innerhalb eines Zylinder 5 ablaufenden Verlagerung einer Kolbenstange 6. Ausgangsseitig der Kolbenstange 6 befindet sich ein Ausrückhebel 7 angeordnet, der sich an einem Widerlager 8 abstützt und dessen Bewegung zur Beaufschlagung von nur schematisch dargestellten Kupplungsscheiben 9 führt.

Innerhalb der Wirkungskette von der Kolbenstange 6 zu dem Ausrückhebel 7 ist ein piezoelektrischer Aktuator 10 angeordnet, der elektrische Energie direkt in Bewegung umwandelt und diese Bewegung als Verstellweg dem vom Aktor 2 als Verfahrweg bewirkten Bewegung überlagert.

Wird nun mittels eines nicht näher dargestellten Sensors eine Rupfschwingung erkannt, wobei hierzu beispielsweise die Fahrzeugslängsbeschleunigung ausgewertet werden kann, so wird der piezoelektrische Aktor mittels eines Steuergeräts zu einer zur Rupfschwingung gegenphasigen und diese auslöschenden Bewegung, dem Verstellweg, angesteuert.

Mit der Darstellung nach Fig. 1 wird eine funktional serielle Anordnung des piezoelektrischen Aktuators 10 in der Kraftübertragungsstrecke zwischen dem Aktor 2 und der Kupplung 9 dargestellt. Eine ähnliche Konfiguration ist in Fig. 2 der Zeichnung dargestellt, die sich von der Ausführungsform nach Fig. 1 dahingehend unterscheidet, dass der piezoelektrische Aktuator 10 nicht an der Kolbenstange des Nehmerzylinders 4 angreift, sondern am Zylinder 5 des Nehmerzylinders 4 und auf diese Weise mit dem piezoelektrischen Aktuator 10 (in Fig. 2 sind zwei an dem Zylinder 5 angreifende Aktuatoren 10 dargestellt) ein Verstellweg realisiert wird derart, dass mittels des Verstellwegs der Aktuatoren 10 eine geringfügige Bewegung des Zylinders 5 des Nehmerzylinders 4 erreicht werden kann, die zu einer Volumenveränderung innerhalb des Nehmerzylinders 4 führt, was wiederum eine Verlagerung der Kolbenstange 6 zur Folge hat.

Die Kolbenstange 6 stützt sich an dem Ausrückhebel 7 ab, der zur Verstellung des Weges der Kupplungsscheiben 9 ausgebildet ist. Damit kann mittels einer entsprechenden Ansteuerung der piezoelektrischen Aktuatoren 10 wiederum ein der festgestellten Rupfschwingung gegenphasiger Verstellweg erreicht werden, der dem Verfahrweg des Aktuators 2 überlagert wird, und wodurch auf diese Weise die Rupfschwingungen gedämpft werden können, bevor sie zu unerwünschten Fahrzeuglängsbeschleunigungen führen, die vom Fahrer eines Fahrzeugs festgestellt werden würden.

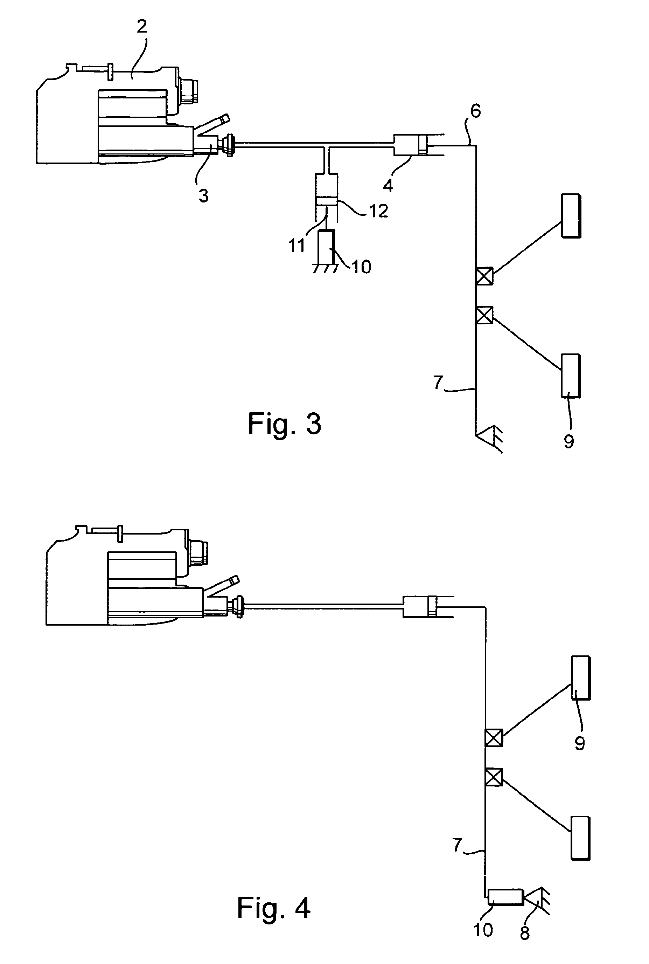

Fig. 3 der Zeichnung zeigt eine Ausführungsform, bei der der Aktuator 10 in der Kraftübertragungsstrecke zwischen dem Aktor 2 und der Kupplung 9 funktional parallel angeordnet ist. Eine vom Geberzylinder 3 des Aktuators 2 induzierte Verschiebung von Hydraulikfluid führt zu einer entsprechenden Verlagerung der Kolbenstange 6 in den Nehmerzylinder 4 und damit zu einem Verfahrweg der Kupplung, die in der Zeichnung wiederum nur durch die schematisch dargestellten Kupplungsscheiben 9 symbolisiert wird.

Wird nun mittels eines nicht näher dargestellten Sensors eine im Bereich der Kupplung auftretende Störanregung festgestellt, so kann über ein nicht dargestelltes Steuergerät der piezoelektrische Aktuator 10 so angesteuert werden, dass er mittels seiner Bewegung eine Kolbenstange 11 verlagert, die über einen Kolben 12 in der Kraftübertragungsstrecke zwischen dem Aktor 2 und dem Nehmerzylinder 4 ein zusätzliches hydraulisches Fluid gegenphasig zur Störanregung verlagert, sodass auf diese Weise ein zur Rupfschwingung respektive der Störanregung gegenphasiger modulierbarer Verstellweg durch den piezoelektrischen Aktuator 10 erzeugt werden kann.

Schließlich zeigt Fig. 4 der Zeichnung eine weitere Ausführungsform nach der vorliegenden Erfindung, bei der ein piezoelektrischer Aktuator 10 zwischen dem Widerlager 8 und dem Ausrückhebel 7 angeordnet ist. Wird nun der piezoelektrische Aktuator 10 mittels einer elektrischen Energie beaufschlagt, so verändert er seine Länge und kann damit den vom Ausrückhebel 7 durchfahrenen Ausrückweg der wiederum nur durch Kupplungsscheiben 9 symbolisch dargestellten Kupplung modifizieren. Auf diese Weise kann durch eine geeignete Ansteuerung des piezoelektrischen Aktuators 10 eine den Verstellweg erzeugende Längeveränderung des piezoelektrischen Aktuators 10 erreicht werden und auf diese Weise eine der Störanregung bzw. der Rupfschwingung entgegenwirkender Verstellweg realisiert werden.

Die Erfindung schafft daher nunmehr eine Vorrichtung zur Modulation des Kupplungswegs mittels eines piezoelektrischen Aktuators. Ein solcher Aktuator zeichnet sich durch eine hohe Dynamik aus, mit der eine erkannte Störanregung bedämpft werden kann, bevor entsprechende vom Fahrer des Fahrzeugs als komfortmindernd empfundene Fahrzeugslängsbeschleunigungen entstehen. Damit kann mittels der erfindungsgemäßen Vorrichtung bereits zu Beginn einer solchen Störanregung eine wirkungsvolle Bekämpfung/Dämpfung erreicht werden. Der von dem piezoelektrischen Aktuator bewirkte Verstellweg wird nach der Erfindung in vorteilhafter Weise einem von einem Hauptausrücksystem in Form eines beispielsweise hydraulischen arbeitenden Aktors bewirkten Verfahrweg überlagert. Auf diese Weise kann bereits zu Beginn einer festgestellten Störanregung ein entsprechender Regelalgorithmus angestoßen werden, mit dem der piezoelektrische Aktuator angesteuert wird und der Störanregung begegnet werden kann.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1: Vorrichtung
- 2: Aktor
- 3: Geberzylinder
- 4: Nehmerzylinder
- 5: Zylinder
- 6: Kolbenstange
- 7: Ausrückhebel
- 8: Wiederlager
- 9: Kupplungsscheibe
- 10: Piezoelektrischer Aktuator
- 11: Kolbenstange
- 12: Kolben

## Patentansprüche

1. Vorrichtung zur Betätigung einer Kupplung (9) eines Fahrzeugs, mit einem den Verfahrweg der Kupplung (9) verstellenden Aktor (2) und einer Einrichtung zur Vermeidung von Rupfschwingungen, die einen dem Verfahrweg überlagerten Verstellweg erzeugt, **dadurch gekennzeichnet, dass** die Einrichtung ein piezoelektrischer Aktuator (10) ist.

2. Vorrichtung nach Anspruch 1, **dadurch gekennzeichnet, dass** der Aktuator (10) einen zur Störanregung gegenphasigen und die Rupfschwingung zumindest weitgehend auslöschenden modulierbaren Verstellweg erzeugt.

3. Vorrichtung nach Anspruch 1 oder 2, **dadurch gekennzeichnet, dass** der Aktuator (10) in der Kraftübertragungsstrecke zwischen dem Aktor (2) und der Kupplung (9) funktional seriell angeordnet ist.

4. Vorrichtung nach Anspruch 1 oder 2, **dadurch gekennzeichnet, dass** der Aktuator (10) in der Kraftübertragungsstrecke zwischen dem Aktor (2) und der Kupplung (9) funktional parallel angeordnet ist.

5. Vorrichtung nach einem der vorstehenden Ansprüche, **dadurch gekennzeichnet, dass** der Aktor (2) einen hydraulischen Geberzylinder (3) zur Verschiebung eines Fluids betätigt derart, dass das verschobene Fluid einen die Kupplung (9) betätigenden Nehmerzylinder (4) beaufschlägt, und der Aktuator (10) zur Betätigung eines Zylinders (5) und/oder einer Kolbenstange (6) des Geberzylinders (3) und/oder Nehmerzylinders (4) ausgebildet ist.

6. Vorrichtung nach einem der vorstehenden Ansprüche, **dadurch gekennzeichnet, dass** der Aktuator (10) einen Hebel (7) zum Öffnen und/oder Schließen der Kupplung (9) entlang des modulierbaren Verstellwegs beaufschlägt.

7. Vorrichtung nach einem der vorstehenden Ansprüche, **dadurch gekennzeichnet, dass** der Aktor (2) und der Aktuator (10) zur automatisierten Betätigung einer Kupplung (9) ansteuerbar sind.

8. Vorrichtung nach einem der Anspruche 1 bis 6, **dadurch gekennzeichnet, dass** der Aktor (2) mittels eines benutzer-betätigten Kupplungspedals eines Fahrzeugs ansteuerbar ist.
